# EUROPÄISCHE PATENTSCHRIFT

(11) **EP 1 239 528 B1**
(45) Veröffentlichungstag und Bekanntmachung des Hinweises auf die Patenterteilung: **01.09.2004**
(21) Anmeldenummer: 02004162.0
(22) Anmeldetag: 26.02.2002
(51) Int. Cl.: H01M 4/04, H01M 4/88, C25B 11/04

(54) **Verfahren zur Herstellung einer mehrschichtigen Elektrode oder Membran-Elektrodenverbundeinheit, und Gasdiffusionselektrode**
Process for preparing a multilayer electrode or membrane - electrode assembly, and gas diffusion electrode
Procédé de preparation d'un électrode multicouche ou d'un ensemble membrane-électrode, et électrode a diffusion de gaz

(30) Priorität: 07.03.2001 DE 10112232
(43) Veröffentlichungstag der Anmeldung: 11.09.2002
(73) Patentinhaber: Deutsches Zentrum für Luft- und Raumfahrt e.V., 51147 Köln (DE)
(72) Erfinder: Kaz, Till, Dipl.-Ing., 70186 Stuttgart (DE); Wagner, Norbert, Dr., 71065 Sindelfingen (DE)
(74) Vertreter: Regelmann, Thomas, Dr.

(56) Entgegenhaltungen:
- EP-A- 0 144 002
- EP-A- 0 339 717
- EP-A- 1 055 748
- WO-A-99/64641
- GB-A- 1 049 428
- US-A- 5 935 643
- US-A- 6 019 144

## Beschreibung

Die Erfindung betrifft ein Verfahren zur Herstellung einer mehrschichtigen Elektrode oder Elektrodenverbundeinheit.

Ferner betrifft die Erfindung eine Elektrode, welche eine aufgewalzte katalytisch aktive Reaktionsschicht aufweist.

Mehrschichtige Elektroden bzw. Elektrodenverbundeinheiten werden beispielsweise in Brennstoffzellen oder bei der Chlor-Alkali-Elektrolyse eingesetzt. Ein weiteres Anwendungsbeispiel ist der Einsatz als Sauerstoffverzehrelektrode bei der HCI-Elektrolyse.

Aus der US 6,019,144 A ist ein Verfahren zur Herstellung einer Elektrodenmaterialschicht auf einem Träger bekannt, bei dem das Elektrodenmaterial auf einen Träger aufgebracht wird, wobei das Elektrodenmaterial eine Mischung ist. Mittels Kontaktmitteln wird das Elektrodenmaterial auf dem Träger kontaktiert. Es wird dann ein Pulver auf die Kontaktmittel aufgebracht, um so ein Anhaften des Elektrodenmaterials an die Kontaktmittel zu verhindern. Das Pulver ist mittels Materials hergestellt, welches das Elektrodenmaterial bildet.

Der Erfindung liegt die Aufgabe zugrunde, ein Verfahren bereitzustellen, mit dem sich eine auf die jeweilige Anwendung optimierte Elektrode oder Elektrodenverbundeinheit auf einfache und insbesondere kostengünstige Weise herstellen läßt.

Diese Aufgabe wird bei dem eingangs genannten Verfahren erfindungsgemäß dadurch gelöst, daß eine erste Schicht auf einen Träger aufgewalzt wird und mindestens eine weitere Funktionsschicht durch Aufsprühung eines Pulvers hergestellt wird.

Dadurch, daß erfindungsgemäß Walzverfahren und Sprühverfahren kombiniert werden, kann auf die Verwendung von Halbzeug bei der Herstellung einer mehrschichtigen Elektrode oder Elektrodenverbundeinheit verzichtet werden. Die einem Halbzeug entsprechende Struktur wird erfindungsgemäß selbst hergestellt.

Durch die Kombination von Walzen und Aufsprühen lassen sich die Vorteile dieser Verfahren jeweils ausnutzen und es lassen sich dann die einzelnen aufgewalzten bzw. aufgesprühten Schichten getrennt voneinander optimieren.

Es ist beispielsweise aus dem Stand der Technik bekannt, eine Trägerstruktur mittels eines Kohlegewebes oder eines Kohlevlieses zu bilden. Derartige Materialien sind aber relativ teuer. Erfindungsgemäß läßt sich beispielsweise eine Trägerstruktur durch Aufwalzen von Kohlenstoffpartikeln auf einen Träger ausbilden, was erheblich kostengünstiger ist als die Verwendung eines Kohlegewebes oder Kohlevlieses. Bei dem Träger kann es sich insbesondere um ein Trägerband oder ein Trägernetz handeln.

Durch Aufsprühen einer Funktionsschicht wie beispielsweise einer Sperrschicht und/oder einer Reaktionsschicht lassen sich die Eigenschaften der mehrschichtigen Elektrode oder Elektrodenverbundeinheit gezielt einstellen, wobei eine Eigenschaftsoptimierung hinsichtlich der unterschiedlichen Schichten durchführbar ist, da unterschiedliche Herstellungsverfahren für getrennte Schichten vorgesehen sind.

Günstig ist es, wenn das Pulver zur Bildung der weiteren Funktionsschicht trocken aufgesprüht wird. Solche trockenen Sprühverfahren lassen sich auf einfache Weise mit Hilfe von einer oder mehreren Sprühdüsen durchführen.

Um zusätzlich zur mechanischen Fixierung eine thermische Fixierung einer Schicht zu bewirken, ist es günstig, wenn eine Aufwalzung einer Schicht mittels einer oder mehrerer beheizter Walzen erfolgt. Dadurch kann auch eine Sprühschicht, auf welche eine weitere Schicht aufgewalzt wird, thermisch fixiert werden.

Auf kostengünstige Weise läßt sich eine Trägerstruktur bilden bzw. ein Träger verwenden, der aus Edelstahl, vergoldetem Edelstahl, aus versilbertem Nickel, insbesondere wenn die hergestellte Elektrode mit alkalischen Medien verwendet wird, oder aus Titan hergestellt ist. Da es sich um metallische Materialien handelt, sind diese zum einen einfach verarbeitbar, beispielsweise von einem Band abrollbar, und andererseits elektrisch leitfähig. Der Träger kann auch aus einem nicht leitfähigen Material hergestellt sein, welches mit einem leitfähigen Werkstoff wie Kohlenstoff beschichtet wird oder wurde.

Bei einer Variante einer Ausführungsform ist eine aufgesprühte Funktionsschicht eine Reaktionsschicht. Beispielsweise wird eine Trägerstruktur durch Aufwalzen eines Kohlenstoffpulvers auf ein Trägernetz gebildet und auf diese Trägerstruktur dann anschließend eine Reaktionsschicht aufgesprüht. Die Herstellung der Trägerstruktur läßt sich dann auf kostengünstige Weise durchführen, wobei die Reaktionsschicht dünn aufsprühbar ist. Da die Reaktionsschicht ein in der Regel teures Katalysatormaterial voraussetzt, läßt sich mittels des dünnen Aufsprühens ebenfalls die Herstellung kostengünstig durchführen. Bei dem Pulvermaterial zur Bildung der Reaktionsschicht durch Aufsprühen handelt es sich insbesondere um ein kohlegeträgertes Katalysatormaterial wie Platin oder andere Edelmetalle. Der Kohleträger stellt ein elektrisch leitendes Material dar, welches kostengünstig und auf einfache Weise verarbeitbar ist.

Bei einer weiteren alternativen oder zusätzlichen Variante einer Ausführungsform ist eine aufgesprühte Funktionsschicht eine Sperrschicht. Bei dem Einsatz von Elektroden oder Elektrodenverbundeinheiten in Elektrolysezellen mit flüssigen Elektrolyten kann das Problem des Elektrolytdurchbruchs entstehen, wenn in den Elektrolysezellen ein hoher hydrostatischer Druck herrscht. Durch die Sperrschicht läßt sich ein solcher Elektrolytdurchbruch verhindern, wobei durch die Aufsprühung die Sperrschicht sich dünn ausbilden läßt.

Zur Gewährleistung der Sperrwirkung ist es vorteilhaft, wenn zur Bildung einer Sperrschicht ein Gemisch aus Kohle und einem hydrophobierenden Material verwendet wird, wobei eben das hydrophobierende Material die Sperrwirkung bezüglich des Elektrolytdurchbruchs erhöht. Andererseits werden durch das Aufsprühen einer dünnen Schicht die elektrochemischen Eigenschaften einer entsprechenden Elektrode im wesentlichen nicht verändert.

Ein vorteilhaftes hydrophobierendes Material ist PTFE (Polytetrafluorethylen).

Sehr gute Ergebnisse haben sich erhalten lassen, wenn die Sperrschicht aus einem Kohlenstoff/PTFE-Gemisch eine Flächendichte im Bereich zwischen 0,3 mg/cm² und 1 mg/cm² aufweist und insbesondere in der Größenordnung von 0,6 mg/cm² liegt. Bei entsprechend hergestellten Gasdiffusionselektroden hat sich die Elektrodenleistung um 100 % gegenüber sperrschichtfreien Elektroden oder mit einer Sperrschichtfolie versehenen Elektroden verbessert.

Bei einer Variante einer Ausführungsform wird eine Trägerstruktur zum Tragen insbesondere einer Reaktionsschicht durch Aufwalzen von Kohlepulver auf den Träger hergestellt. Dadurch läßt sich auf kostengünstige Weise eine Trägerstruktur ausbilden, insbesondere wenn als Träger ein Trägernetz aus Edelstahl, versilbertem Nickel oder Titan eingesetzt wird.

Um ein sicheres Haften des Kohlepulvers an dem Träger zu gewährleisten und die Haftung der Kohleteilchen in der Schicht zu sichern, ist es vorteilhaft, wenn das Kohlepulver mit einem Bindemittel vermischt aufgewalzt wird. Als Bindemittel kann ein hydrophobierendes Material wie PTFE verwendet werden, so daß gleichzeitig die Trägerstruktur auch eine Sperrwirkung bezüglich eines Elektrolytdurchbruchs aufweist.

Weiterhin kann dem aufzuwalzenden Material ein Porenbildner wie Amoniumhydrogenkarbonat oder Zitronensäure zugemischt werden, um so entsprechend definiert die Struktur der Trägerstruktur einzustellen.

Insbesondere ist es vorgesehen, daß die Zusammensetzung des aufzuwalzenden Materials und/oder die Partikelgröße darin und/oder ein Anpreßdruck beim Aufwalzen eingestellt wird, um eine definiert aufgebaute Schicht optimiert für die spezielle Anwendung zu erhalten.

Zur Bildung einer Elektrodenverbundeinheit beispielsweise zur Verwendung in Membranbrennstoffzellen kann dann die Trägerstruktur mit einer Membran verbunden werden. Günstigerweise wird dabei dann auf die Trägerstruktur und/oder auf die Membran vor deren Verbindung eine Funktionsschicht aufgesprüht, bei der es sich insbesondere um eine Reaktionsschicht mit einem katalytisch aktiven Material wie Platin handelt. Durch die Aufsprühung läßt sich diese Funktionsschicht dünn ausbilden, um insbesondere Materialkosten zu sparen. Es lassen sich dann auch die Trägerstruktur mit einer eventuell aufgespritzten Funktionsschicht und die Membran mit einer eventuell aufgesprühten Funktionsschicht auf einfache Weise zusammenbringen und verbinden, wobei dann die Funktionsschicht zwischen der Trägerstruktur und der Membran liegt.

Bei einer Variante eines Ausführungsbeispiels ist es vorgesehen, daß vor der Verbindung zwischen Trägerstruktur und Membran auf eine Verbindungsseite der Membran und eine gegenüberliegende Seite der Membran eine Funktionsschicht und insbesondere eine Reaktionsschicht aufgesprüht wird. Auf diese Weise läßt sich schnell und kostengünstig eine Elektrodenverbundeinheit als Elektroden-Membran-Einheit herstellen.

Es kann vorgesehen sein, daß die jeweilige Aufsprühung gleichzeitig erfolgt, so daß die Herstellung vereinfacht ist.

Insbesondere handelt es sich bei der Funktionsschicht um eine Reaktionsschicht mit einem katalytisch aktiven Material.

Auf einfache Weise läßt sich die Verbindung zwischen Trägerstruktur und Membran, wobei mindestens eine von diesen mit einer Reaktionsschicht versehen ist, durch Aufwalzung herstellen. Sind die entsprechenden Walzen beheizt, dann läßt sich neben einer thermischen Fixierung der Verbindung zwischen Trägerstruktur und Membran auch eine thermische Fixierung der Reaktionsschicht an der Trägerstruktur und/oder der Membran erreichen.

Zur Bildung einer Elektroden-Membran-Einheit insbesondere für eine Brennstoffzelle ist es vorteilhaft, wenn mit der Trägerstruktur-Membran-Verbindung eine weitere Trägerstruktur verbunden wird. Es läßt sich damit auf beiden Seiten der Membran eine katalytisch aktive Reaktionsschicht anordnen, welche entweder auf die Membran oder auf die jeweilige Trägerstruktur aufgesprüht wird. Vorteilhafterweise wird die weitere Trägerstruktur zur Bildung der Elektroden-Membran-Einheit aufgewalzt.

Günstig ist es, wenn die weitere Trägerstruktur im wesentlichen gleich aufgebaut ist wie die Trägerstruktur, welche zuerst mit der Membran verbunden wird. Die weitere Trägerstruktur weist ja im wesentlichen die gleiche Funktion auf wie die Trägerstruktur, welche zuerst mit der Membran verbunden wird, so daß sich auf einfache Weise die Elektroden-Membran-Einheit herstellen läßt. Günstig ist es dazu auch, wenn die weitere Trägerstruktur im wesentlichen auf die gleiche Weise hergestellt wird wie die Trägerstruktur, welche zuerst mit der Membran verbunden wird.

Vorteilhafterweise wird eine solchermaßen gebildete Elektroden-Membran-Einheit für eine Brennstoffzelle eingesetzt.

Bei einer Variante einer Ausführungsform ist es vorgesehen, daß die erste Schicht eine aufgewalzte Reaktionsschicht ist. Auf diese aufgewalzte Reaktionsschicht wird dann anschließend eine Sperrschicht aufgesprüht, um die Gefahr eines Elektrolytdurchbruchs zu vermeiden.

Es kann weiterhin vorgesehen sein, daß, sofern der Träger nicht leitend ist, auf diesen eine Kontaktschicht aufgesprüht wird, wobei insbesondere für die Kontaktschicht im wesentlichen das gleiche Material wie für die Sperrschicht verwendet wird.

Eine derartige Elektrode, bei der es sich insbesondere um eine Gasdiffusionselektrode handelt, läßt sich auf einfache Weise herstellen, wenn die Sperrschicht und die Kontaktschicht gleichzeitig aufgesprüht werden.

Es kann auch noch vorgesehen sein, daß eine Membran auf einer äußeren Funktionsschicht wie einer Reaktionsschicht angeordnet wird.

Eine wie oben beschrieben hergestellte Elektrodenverbundeinheit läßt sich auf vorteilhafte Weise im Zusammenhang mit einer Brennstoffzelle verwenden.

Eine Elektrode, auf welche eine Sperrschicht aufgesprüht wird, läßt sich auf vorteilhafte Weise als Gasdiffusions- oder Sauerstoffverzehrelektrode verwenden.

Ferner liegt der Erfindung die Aufgabe zugrunde, eine Elektrode zu schaffen, welche eine hohe Elektrodenleistung aufweist.

Diese Aufgabe wird bei einer Elektrode, welche eine katalytisch aktive Reaktionsschicht aufweist, erfindungsgemäß dadurch gelöst, daß auf die Reaktionsschicht ein mittels eines aufgesprühten Pulvers hergestellte Sperrschicht angeordnet ist.

Durch das Aufsprühen einer Sperrschicht beispielsweise auf eine gewalzte Gasdiffusionselektrode läßt sich das Problem des Elektrolytdurchbruchs verhindern. Es muß aufgrund der Aufsprühung eines entsprechenden trockenen Pulvers auch kein Gewebe wie beispielsweise ein PTFE-Gewebe auf der Reaktionsschicht angeordnet werden, welches entsprechend kostspielig ist und die Herstellung erschwert. Zudem entstehen bei der Anordnung eines Gewebes auf der Gasdiffusionselektrode Haftungsprobleme, insbesondere beim Einsatz.

Durch solche erfindungsgemäße Elektroden haben sich um 100 % erhöhte Elektrodenleistungen ergeben.

Besonders vorteilhaft ist es dabei, wenn die Sperrschicht durch eine Mischung von Kohlenstoff und einem hydrophobierenden Material gebildet ist. Bei dem hydrophobierenden Material handelt es sich beispielsweise um PTFE.

Als vorteilhaft hat es sich erwiesen, wenn insbesondere bei diesem genannten Material die Sperrschicht eine Flächendichte im Bereich zwischen 0,4 mg/cm² und 0,8 mg/cm² aufweist und diese Flächendichte insbesondere bei 0,6 mg/cm² liegt.

Weitere Vorteile und Ausgestaltungen einer solchen erfindungsgemäßen Elektrode wurden bereits im Zusammenhang mit dem erfindungsgemäßen Verfahren erläutert.

Die nachfolgende Beschreibung bevorzugter Ausführungsbeispiele dient im Zusammenhang mit der Zeichnung der näheren Erläuterung der Erfindung. Es zeigen:
- Figur 1: eine schematische Darstellung eines ersten Ausführungsbeispiels des erfindungsgemäßen Verfahrens zur Herstellung einer Elektrodenverbundeinheit, wobei die Herstellung einer Elektroden-Membran-Einheit gezeigt ist;
- Figur 2: eine schematische Darstellung eines zweiten Ausführungsbeispiels des erfindungsgemäßen Verfahrens zur Herstellung einer Elektrode, bei dem eine Gasdiffusionselektrode mit einer Sperrschicht versehen wird, und
- Figur 3: eine schematische Darstellung einer erfindungsgemäßen Gasdiffusionselektrode mit Sperrschicht.

Bei einem ersten Ausführungsbeispiel des erfindungsgemäßen Verfahrens wird in einem ersten Schritt beispielsweise in einer Messermühle eine Mischung aus Kohlenstoff und einem Bindemittel wie PTFE (Polytetrafluorethylen) hergestellt. Gegebenenfalls kann noch ein Porenbildner wie beispielsweise Amoniumhydrogencarbonat oder Zitronensäure hinzugegeben werden. In der Messermühle wird dabei die Partikelgröße insbesondere der Kohle gezielt eingestellt, so daß eine bestimmte mittlere Partikelgröße in der Mischung überwiegt.

Diese Mischung 8 wird einer Auftragseinrichtung 10 zugeführt, welche trichterförmig ausgebildet ist mit einer Zufuhröffnung 12 und einer Auftragsöffnung 14. Über letztere läßt sich die Mischung 8 auf einen Träger 16 aufbringen.

Der Träger 16 ist bandförmig und insbesondere als Trägernetz ausgebildet. Beispielsweise handelt es sich bei dem Träger 16 um ein Edelstahlnetz, ein versilbertes Nickelnetz oder ein Titannetz.

Das Aufbringen der Mischung 8 auf den Träger 16 erfolgt in einem Kalander 18, welcher gegenläufige Walzen 20, 22 mit im wesentlichen parallelen Drehachsen aufweist. Deren Drehrichtungen sind dabei in dem Bereich, in dem die Mischung 8 aus der Auftragsöffnung 14 auf den Träger 16 trifft, im wesentlichen parallel zu der Fließrichtung der Mischung 8; die Mischung 8 wird auf den Träger 16 über die bezogen auf die Walzendrehung tangentiale Zuführung aufgewalzt.

Der Anpreßdruck der Walzen 20, 22 ist bei der Aufwalzung einstellbar, insbesondere dadurch, daß der Abstand der Drehachsen der beiden Walzen 20 und 22 einstellbar ist und/oder die Drehgeschwindigkeit der Walzen 20, 22 einstellbar ist.

Es kann auch vorgesehen sein, daß die Walzen 20, 22 beheizbar sind, um eine thermische Fixierung der Mischung 8 auf dem Träger 16 zu bewirken.

Über die Zusammensetzung der Mischung 8 und insbesondere über die Einstellung des Bindemittelgehalts in der Mischung und des Porenbildnergehalts, über die Einstellung der mittleren Partikelgröße in der Mischung 8 und über die Einstellung des Anpreßdruckes läßt sich gezielt eine Trägerstruktur 24 ausbilden, welche durch die auf den Träger 16 aufgewalzte Mischung 8 und eben den Träger 16 gebildet ist. Diese Trägerstruktur 24 kann dabei auch elektrolytabweisend wirken, wenn entsprechend ein hydrophobierendes Bindemittel wie PTFE eingesetzt wird und der Gehalt dieses hydrophobierenden Bindemittels in der Mischung entsprechend groß ist.

Die Trägerstruktur 24 läßt sich herstellen ohne Verwendung eines Kohlegewebes oder Kohlevlieses, so daß das Verfahren kostengünstig durchführbar ist.

In einem weiteren Schritt wird die Trägerstruktur 24 mit einer protonenleitenden Membran 26 verbunden.

Zwischen der protonenleitenden Membran 26 und der Trägerstruktur 24 wird dabei eine Reaktionsschicht angeordnet, welche katalytisch aktiv ist. Diese Reaktionsschicht wird vor der Verbindung aufgesprüht.

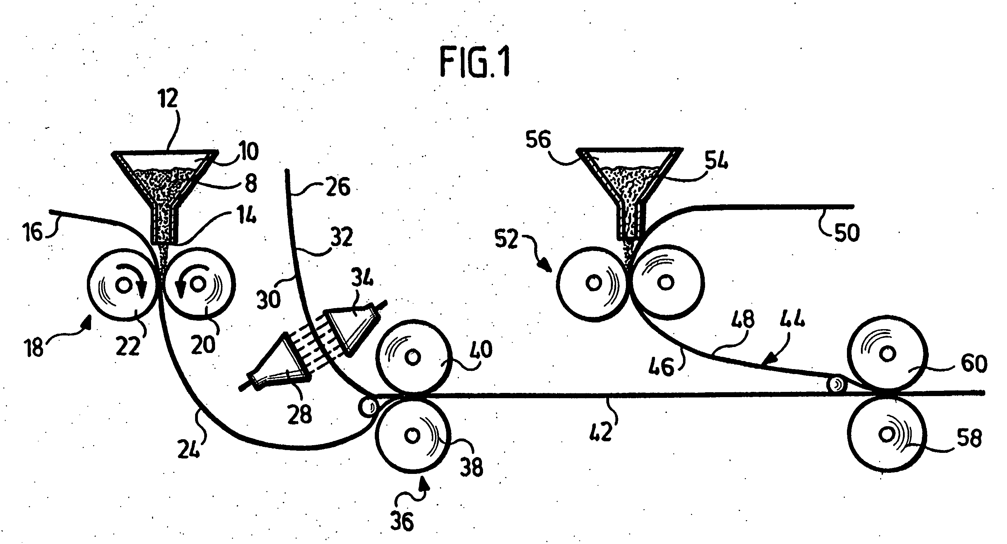

In Fig. 1 ist eine Variante einer Ausführungsform gezeigt, bei welcher mittels einer Sprühdüse 28 die Reaktionsschicht auf die Verbindungsseite 30 der Membran 26 zu der Trägerstruktur 24 hin weist. Es kann aber auch vorgesehen sein, daß die Reaktionsschicht auf die Trägerstruktur 24 aufgesprüht wird.

Mittels der Sprühdüse 28 wird ein trockenes Pulver auf die Membran 26 aufgesprüht, um eine dünne Reaktionsschicht zu bilden. Bei dem Pulver kann es sich beispielsweise um kohlegeträgertes Platin mit Platin als katalytisch aktivem Material handeln.

Es kann weiterhin vorgesehen sein, daß insbesondere gleichzeitig mit dem Aufbringen der Reaktionsschicht auf die Verbindungsseite 30 der Membran 26 eine weitere Reaktionsschicht auf die der Verbindungsseite 30 gegenüberliegende Seite 32 der Membran 26 aufgebracht wird. Dazu ist beispielsweise eine Düse 34 vorgesehen. In Fig. 1 ist eine Variante gezeigt, bei der die Pulverstrahlen der beiden Sprühdüsen 28 und 34 entgegengerichtet sind und die Membran 26 durch diese Pulverstrahlen hindurchgeführt wird, um eben Reaktionsschichten gleichzeitig auf den beiden Seiten 30 und 32 der Membran 26 zu bilden.

Die Verbindung zwischen der Trägerstruktur 24 und der mit den Reaktionsschichten versehenen Membran 26 erfolgt in einem Kalander 36 mit gegenläufigen Walzen 38, 40. Die Walzen 38 und 40 sind insbesondere beheizt, um für eine thermische Fixierung der Reaktionsschichten an der Membran und auch für eine thermische Fixierung der Reaktionsschicht auf der Verbindungsseite 30 an der Trägerstruktur 24 zu sorgen.

Aus dem Kalander 36 tritt dann eine Trägerstruktur-Membran-Verbindung 42 heraus. Diese wird mit einer weiteren Trägerstruktur 44 versehen, welche grundsätzlich gleich aufgebaut ist wie die Trägerstruktur 24, wobei die Seite 46 der Trägerstruktur 44 mit aufgewalztem Material der Trägerstruktur-Membran-Verbindung 42 zu auf dieser angeordnet wird, so daß eine Trägerseite 48 der Trägerstruktur 44 von der Trägerstruktur-Membran-Verbindung 42 abgewandt ist.

Zur Herstellung der Trägerstruktur 44 wird, wie anhand der Herstellung der Trägerstruktur 24 beschrieben, ein Träger 50 durch einen Kalander 52 geführt, wobei eine Mischung 54, welche insbesondere gleich zusammengesetzt ist wie die Mischung 8, über eine Auftragseinrichtung 56 dem Kalander 52 zugeführt wird.

Es ist insbesondere vorgesehen, daß bei dem Auftrag der Mischung 54 im wesentlichen die gleichen Bedingungen herrschen wie beim Auftrag der Mischung 8 auf den Träger 16, um eben eine gleiche Ausbildung der Trägerstrukturen 24 und 44 zu erhalten.

Die Trägerstruktur 24 wird dann mittels gegenläufiger Walzen 58, 60 auf die Trägerstruktur-Membran-Verbindung aufgewalzt. Dadurch erhält man eine Elektroden-Membran-Einheit, die beispielsweise in einer Brennstoffzelle einsetzbar ist (PEFC - Proton Exchange Membrane Fuel Cells).

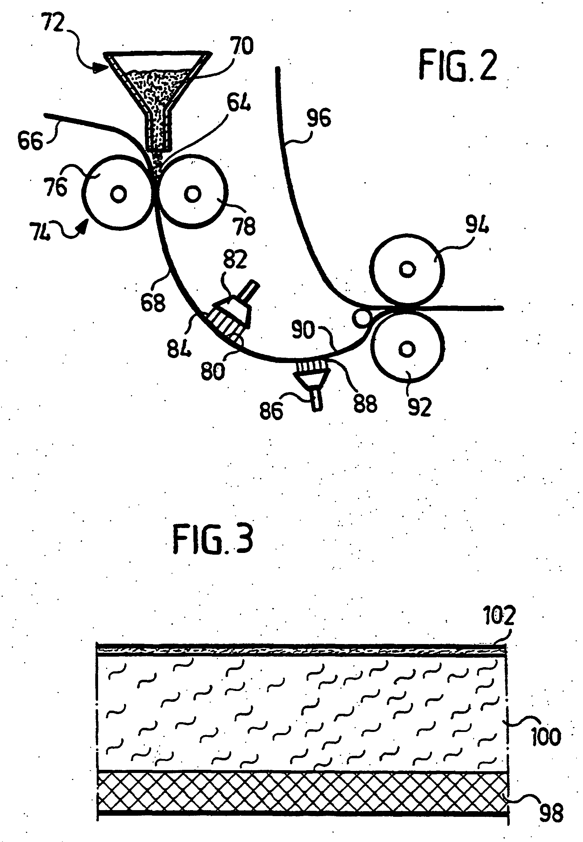

Bei einem zweiten Ausführungsbeispiel des erfindungsgemäßen Verfahrens wird, wie in Fig. 2 schematisch dargestellt, durch Aufwalzung einer Reaktionsschicht 64 auf einen Träger 66 eine Gasdiffusionselektrode (GDE) 68 hergestellt.

Zur Herstellung der Reaktionsschicht 64 dient ein katalytisches Pulver 70 aus einer Mischung eines elektrischen Materials, z.B. Kohlenstoff, eines Katalysatormaterials, z.B. Platin, und weiterer Additive. Diese Bestandteile werden in einer Messermühle zu dem Pulver 70 miteinander vermischt (in Fig. 2 nicht gezeigt).

Über eine trichterförmige Auftragseinrichtung 72 wird das Pulver 70 insbesondere mittels Schwerkraftwirkung einem Kalander 74 mit einem gegenläufigen Walzenpaar 76, 78 zugeführt und dort die Reaktionsschicht 64 in einer vorgegebenen Dicke aufgewalzt. Dieses Verfahren und eine beispielhafte Zusammensetzung des Pulvers 70 sind in der DE 195 09 749 A1 beschrieben, auf die hiermit ausdrücklich Bezug genommen wird.

Auf die so hergestellte Gasdiffusionselektrode 68 wird auf die Reaktionsschicht 64 eine Sperrschicht 80 als Funktionsschicht aufgesprüht. Dazu sind eine oder mehrere Sprühdüsen 82 zum trockenen Aufsprühen eines Pulvermaterials zur Bildung einer dünnen Sperrschicht vorgesehen.

Bei dem Einsatz von Elektroden insbesondere in elektrolytischen Zellen mit flüssigen Elektrolyten wie beispielsweise in alkalischen Brennstoffzellen, Chlor-Alkali-Elektrolysezellen oder HCI-Elektrolysezellen besteht grundsätzlich das Problem, daß der Elektrolyt durchbrechen kann. Die Sperrschicht 80 verhindert solch einen Durchbruch. Dazu ist in das aufzusprühende Pulver 84 ein hydrophobierendes Material gemischt, wie beispielsweise PTFE. Das Trägermaterial des Pulvers 84 ist ein elektrisch leitendes Material und insbesondere Kohlenstoff.

Das Pulver 84 wird auf die Gasdiffusionselektrode 68 mit einer Flächendichte aufgebracht, die beispielsweise in der Größenordnung von 0,6 mg/cm² liegt. Durch das Aufbringen einer solchen Sperrschicht haben sich Elektrodenleistungen um 100 % steigern lassen im Vergleich zu einer gleich hergestellten aber sperrschichtfreien Gasdiffusionselektrode.

Der Träger 66 ist insbesondere als Trägerband oder Trägernetz ausgebildet. Ein Trägernetz ist beispielsweise aus Edelstahl, versilbertem Nickel oder Titan hergestellt. Im Falle, daß das Trägernetz 66 nicht leitend ist, wird mittels einer oder mehrerer Sprühdüsen 86 noch auf die der Reaktionsschicht 64 abgewandte Seite der Gasdiffusionselektrode 68 eine Kontaktschicht 88 aufgesprüht, welche insbesondere aus einer dem Pulver 84 entsprechenden Mischung hergestellt wird, das heißt, aus einer Kohlenstoff-PTFE-Mischung hergestellt wird. Damit wirkt die Kontaktschicht 88 dann gleichzeitig auch als Sperrschicht.

Die Sprühdüsen 82 und 86 können so räumlich versetzt zueinander angeordnet sein, daß zuerst die Reaktionsschicht 84 aufgesprüht wird und dann anschließend auf der Gegenseite der aufgewalzten Gasdiffusionselektroden 68 die Kontaktschicht 88. Es kann aber auch vorgesehen sein, daß die beiden Schichten 84 und 88 gleichzeitig aufgesprüht werden, beispielsweise indem die beiden Sprühdüsen 82 und 86 gegenüberliegend angeordnet sind.

Die Gasdiffusionselektrode 90 mit aufgesprühter Sperrschicht wird einem gegenläufigen Walzenpaar 92, 94 zugeführt, wobei die Walzen insbesondere beheizt sind, um für eine thermische Fixierung de Sperrschicht 80 (und gegebenenfalls der Kontaktschicht 88) an der Gasdiffusionselektrode zu sorgen.

Es kann in einem weiteren Schritt vorgesehen sein, daß zur Herstellung einer Verbundeinheit aus der Gasdiffusionselektrode 90 und einem Festelektrolyt, beispielsweise für eine Brennstoffzelle, in dem Walzenpaar 92, 94 eine Membran 96 zugeführt wird und dort auf die Gasdiffusionselektrode 90 und zwar auf deren Sperrschicht 80 aufgewalzt wird. Die Herstellung solch einer Verbundeinheit ist in der DE 195 09 749 A1 beschrieben, auf die ausdrücklich Bezug genommen wird.

Durch das erfindungsgemäße Herstellungsverfahren wird eine erste Schicht aufgewalzt. Bei dem ersten Ausführungsbeispiel wird dabei die Trägerstruktur 24 gebildet und beim zweiten Ausführungsbeispiel die Gasdiffusionselektrode mit der Reaktionsschicht 64 als erster Schicht. Danach wird eine Elektrodenverbundeinheit oder eine Elektrode mit mindestens einer weiteren aufgesprühten Funktionsschicht versehen. Durch die erfindungsgemäße Kombination von Aufwalzen und Aufsprühen von Schichten kann eine Funktionentrennung der Schichten stattfinden, wobei die Funktion der Schicht selber in dem Aufbringverfahren berücksichtigt wird.

Es brauchen dann keine Halbzeuge vorgesehen werden wie Backings, Sperrfolien, zweiten Elektroden oder dergleichen. Diese Halbzeuge sind zum Teil sehr teuer (wie Kohlegewebe oder Kohlevliese oder auch PTFE-Gewebe).

Durch das erfindungsgemäße Verfahren läßt sich eine mehrschichtige Elektrode oder mehrschichtige Elektrodenverbundeinheit herstellen, bei der mittels des Herstellungsverfahrens sich die einzelnen Schichten in ihrer Funktionsweise optimieren lassen.

Bei einer erfindungsgemäßen Gasdiffusionselektrode, welche in Fig. 3 gezeigt ist und die insbesondere mit einem Verfahren gemäß dem Ausführungsbeispiel nach Fig. 2 hergestellt ist, ist auf einem Träger 98, beispielsweise einem Edelstahlnetz, versilberten Nickelnetz oder Titannetz eine Reaktionsschicht 100 angeordnet, welche beispielsweise aufgewalzt wurde. Die Reaktionsschicht ist aus einer Mischung eines elektrisch leitenden Materials, z.B. Kohlenstoff, eines Katalysatormaterials, z.B. Platin, und eventuellen weiteren Additiven hergestellt.

Auf der Reaktionsschicht 100 ist eine dünne Sperrschicht 102 angeordnet, welche aufgesprüht wurde. Diese Sperrschicht dient zur Verhinderung eines Elektrolytdurchbruchs bei der Verwendung der Elektrode in einer elektrolytischen Zelle. Das Material der Sperrschicht 102 ist dabei an den elektrochemischen Reaktionen an der Elektrode nicht beteiligt. Dem mittels eines Pulver aufgesprühtem Materials zur Bildung der Sperrschicht 102 ist ein hydrophobierender Werkstoff wie PTFE zugesetzt, um eben die Sperrwirkung zu erzielen. Um die Leitfähigkeit zu gewährleisten, ist das aufgesprühte Pulver eine Mischung eines elektrisch leitenden Materials, z.B. Kohlenstoff, und eben dieses hydrophobierenden Materials. Die Flächendichte der Sperrschicht liegt dabei im Bereich zwischen ca. 0,3 mg/cm² und 1 mg/cm² und insbesondere bei ca. 0,6 mg/cm².

Durch eine derart hergestellte Elektrode haben sich um 100 % verbesserte Elektrodenleistungen gegenüber einer nicht mit einer aufgesprühten Sperrschicht versehene Elektroden erhalten lassen.

## Patentansprüche

1. Verfahren zur Herstellung einer mehrschichtigen Elektrode oder Elektrodenverbundeinheit, bei dem eine erste Schicht auf einen Träger aufgewalzt wird und mindestens eine weitere Funktionsschicht durch Aufsprühung eines Pulvers hergestellt wird.

2. Verfahren nach Anspruch 1, **dadurch gekennzeichnet, daß** das Pulver trocken aufgesprüht wird.

3. Verfahren nach Anspruch 1 oder 2, **dadurch gekennzeichnet, daß** die Aufwalzung mittels einer oder mehrerer beheizter Walzen erfolgt.

4. Verfahren nach einem der vorangehenden Ansprüche, **dadurch gekennzeichnet, daß** der Träger als Trägernetz ausgebildet ist.

5. Verfahren nach einem der vorangehenden Ansprüche, **dadurch gekennzeichnet, daß** der Träger aus einem metallisch leitenden Material hergestellt ist.

6. Verfahren nach einem der vorangehenden Ansprüche, **dadurch gekennzeichnet, daß** der Träger aus Edelstahl hergestellt ist.

7. Verfahren nach einem der Ansprüche 1 bis 5, **dadurch gekennzeichnet, daß** der Träger aus versilbertem Nickel hergestellt ist.

8. Verfahren nach einem der Ansprüche 1 bis 5, **dadurch gekennzeichnet, daß** der Träger aus Titan hergestellt ist.

9. Verfahren nach einem der Ansprüche 1 bis 4, **dadurch gekennzeichnet, daß** der Träger einen elektrisch nicht leitenden Werkstoff umfaßt, auf welchen eine leitende Kontaktschicht aufgebracht wird oder wurde.

10. Verfahren nach einem der vorangehenden Ansprüche, **dadurch gekennzeichnet, daß** eine aufgesprühte Funktionsschicht eine Reaktionsschicht ist.

11. Verfahren nach Anspruch 10, **dadurch gekennzeichnet, daß** eine Reaktionsschicht durch Aufsprühen eines kohlegeträgerten Katalysatormaterials hergestellt wird.

12. Verfahren nach Anspruch 11, **dadurch gekennzeichnet, daß** als Katalysatormaterial Platin eingesetzt wird.

13. Verfahren nach einem der vorangehenden Ansprüche, **dadurch gekennzeichnet, daß** eine aufgesprühte Funktionsschicht eine Sperrschicht ist.

14. Verfahren nach Anspruch 13, **dadurch gekennzeichnet, daß** zur Bildung einer Sperrschicht ein Gemisch aus Kohlenstoff und einem hydrophobierenden Material verwendet wird.

15. Verfahren nach Anspruch 14, **dadurch gekennzeichnet, daß** als hydrophobierendes Material PTFE verwendet wird.

16. Verfahren nach einem der Ansprüche 13 bis 15, **dadurch gekennzeichnet, daß** die Sperrschicht eine Flächendichte im Bereich zwischen 0,3 mg/cm² und 1 mg/cm² aufweist.

17. Verfahren nach einem der vorangehenden Ansprüche, **dadurch gekennzeichnet, daß** eine Trägerstruktur durch Aufwalzen von Kohlepulver auf einem Träger hergestellt wird.

18. Verfahren nach Anspruch 17, **dadurch gekennzeichnet, daß** das Kohlepulver mit einem Bindemittel vermischt aufgewalzt wird.

19. Verfahren nach Anspruch 18, **dadurch gekennzeichnet, daß** als Bindemittel ein hydrophobierendes Material verwendet wird.

20. Verfahren nach Anspruch 18 oder 19, **dadurch gekennzeichnet, daß** als Bindemittel PTFE verwendet wird.

21. Verfahren nach einem der Ansprüche 17 bis 20, **dadurch gekennzeichnet, daß** dem aufzuwalzenden Material ein Porenbildner zugemischt wird.

22. Verfahren nach einem der Ansprüche 17 bis 21, **dadurch gekennzeichnet, daß** die Zusammensetzung des aufzuwalzenden Materials und/oder die Partikelgröße darin und/oder ein Anpreßdruck beim Aufwalzen eingestellt wird.

23. Verfahren nach einem der Ansprüche 17 bis 22, **dadurch gekennzeichnet, daß** die Trägerstruktur mit einer Membran verbunden wird.

24. Verfahren nach Anspruch 23, **dadurch gekennzeichnet, daß** auf die Trägerstruktur und/oder auf die Membran vor deren Verbindung eine Funktionsschicht aufgesprüht wird.

25. Verfahren nach Anspruch 24, **dadurch gekennzeichnet, daß** vor der Verbindung zwischen Trägerstruktur und Membran auf eine Verbindungsseite der Membran und eine gegenüberliegende Seite eine Funktionsschicht aufgesprüht wird.

26. Verfahren nach Anspruch 25, **dadurch gekennzeichnet, daß** die jeweilige Aufsprühung gleichzeitig erfolgt.

27. Verfahren nach einem der Ansprüche 24 bis 26, **dadurch gekennzeichnet, daß** die Funktionsschicht eine Reaktionsschicht ist.

28. Verfahren nach einem der Ansprüche 24 bis 27, **dadurch gekennzeichnet, daß** die Verbindung zwischen Trägerstrukur und Membran durch Aufwalzung erfolgt.

29. Verfahren nach einem der Ansprüche 23 bis 28, **dadurch gekennzeichnet, daß** mit der Trägerstruktur-Membran-Verbindung eine weitere Trägerstruktur verbunden wird.

30. Verfahren nach Anspruch 29, **dadurch gekennzeichnet, daß** die weitere Trägerstruktur aufgewalzt wird.

31. Verfahren nach Anspruch 29 oder 30, **dadurch gekennzeichnet, daß** die weitere Trägerstruktur im wesentlichen gleich aufgebaut ist wie die Trägerstruktur, welche zuerst mit der Membran verbunden wird.

32. Verfahren nach einem der Ansprüche 29 bis 31, **dadurch gekennzeichnet, daß** die weitere Trägerstruktur im wesentlichen auf die gleiche Weise hergestellt wird wie die Trägerstruktur, welche zuerst mit der Membran verbunden wird.

33. Verfahren nach einem der Ansprüche 23 bis 32, **dadurch gekennzeichnet, daß** eine Elektroden-Membran-Einheit für eine Brennstoffzelle gebildet wird.

34. Verfahren nach einem der Ansprüche 1 bis 16, **dadurch gekennzeichnet, daß** die erste Schicht eine aufgewalzte Reaktionsschicht ist.

35. Verfahren nach Anspruch 34, **dadurch gekennzeichnet, daß** auf die aufgewalzte Reaktionsschicht eine Sperrschicht aufgesprüht wird.

36. Verfahren nach Anspruch 34 oder 35, **dadurch gekennzeichnet, daß** eine Kontaktschicht auf einen elektrisch nicht leitenden Träger aufgesprüht wird.

37. Verfahren nach Anspruch 36, **dadurch gekennzeichnet, daß** für die Kontaktschicht im wesentlichen das gleiche Material wie für die Sperrschicht verwendet wird.

38. Verfahren nach einem der Ansprüche 35 bis 37, **dadurch gekennzeichnet, daß** die Sperrschicht und die Kontaktschicht gleichzeitig aufgesprüht werden.

39. Verfahren nach einem der Ansprüche 34 bis 38, **dadurch gekennzeichnet, daß** eine Membran auf einer äußeren Funktionsschicht angeordnet wird.

40. Verwendung einer gemäß dem Verfahren nach einem der Ansprüche 23 bis 32 hergestellten Elektrodenverbundeinheit in einer Brennstoffzelle.

41. Verwendung einer gemäß den Verfahren nach einem der Ansprüche 1 bis 22 oder 34 bis 39 hergestellten Elektrode als Gasdiffusionselektrode.

42. Verwendung einer gemäß den Verfahren nach einem der Ansprüche 1 bis 22 oder 34 bis 39 hergestellten Elektrode als Sauerstoffverzehrelektrode.

43. Elektrode, welche eine aufgewalzte katalytisch aktive Reaktionsschicht (100) aufweist, **dadurch gekennzeichnet, daß** auf der Reaktionsschicht (100) eine mittels eines aufgesprühten Pulvers hergestellte Sperrschicht (102) angeordnet ist.

44. Elektrode nach Anspruch 43, **dadurch gekennzeichnet, daß** die Sperrschicht (102) durch eine Mischung von Kohlenstoff und einem hydrophobierenden Material gebildet ist.

45. Elektrode nach Anspruch 44, **dadurch gekennzeichnet, daß** das hydrophobierende Material PTFE ist.

46. Elektrode nach einem der Ansprüche 43 bis 45, **dadurch gekennzeichnet, daß** die Sperrschicht (102) eine Flächendichte im Bereich zwischen 0,4 mg/cm² und 0,8 mg/cm² aufweist.

## Claims

1. Process for the production of a multilayer electrode or electrode assembly, wherein a first layer is rolled onto a carrier and at least one additional function layer is produced by spraying on a powder.

2. Process as defined in claim 1, **characterized in that** the powder is sprayed on dry.

3. Process as defined in claim 1 or 2, **characterized in that** the roller application is brought about by means of one or more heated rollers.

4. Process as defined in any one of the preceding claims, **characterized in that** the carrier is designed as a carrier mesh.

5. Process as defined in any one of the preceding claims, **characterized in that** the carrier is produced from a metallically conductive material.

6. Process as defined in any one of the preceding claims, **characterized in that** the carrier is produced from high-grade steel.

7. Process as defined in any one of claims 1 to 5, **characterized in that** the carrier is produced from silver-plated nickel.

8. Process as defined in any one of claims 1 to 5, **characterized in that** the carrier is produced from titanium.

9. Process as defined in any one of claims 1 to 4, **characterized in that** the carrier comprises an electrically non-conductive material, a conductive contact layer being or having been applied to said material.

10. Process as defined in any one of the preceding claims, **characterized in that** a sprayed-on function layer is a reaction layer.

11. Process as defined in claim 10, **characterized in that** a reaction layer is produced by spraying on a catalyst carrier material on a carbon basis.

12. Process as defined in claim 11, **characterized in that** platinum is used as catalyst material.

13. Process as defined in any one of the preceding claims, **characterized in that** a sprayed-on function layer is a barrier layer.

14. Process as defined in claim 13, **characterized in that** a mixture of carbon and a hydrophobing material is used for forming a barrier layer.

15. Process as defined in claim 14, **characterized in that** PTFE is used as hydrophobing material.

16. Process as defined in any one of claims 13 to 15, **characterized in that** the barrier layer has a surface density in the range of between 0.3 mg/cm² and 1 mg/cm².

17. Process as defined in any one of the preceding claims, **characterized in that** a carrier structure is produced by rolling carbon powder onto a carrier.

18. Process as defined in claim 17, **characterized in that** the carbon powder is rolled on mixed with a binding agent.

19. Process as defined in claim 18, **characterized in that** a hydrophobing material is used as binding agent.

20. Process as defined in claim 18 or 19, **characterized in that** PTFE is used as binding agent.

21. Process as defined in any one of claims 17 to 20, **characterized in that** a pore-forming agent is added to the material to be rolled on.

22. Process as defined in any one of claims 17 to 21, **characterized in that** the composition of the material to be rolled on and/or the particle size therein and/or a contact pressure during the roller application is adjusted.

23. Process as defined in any one of claims 17 to 22, **characterized in that** the carrier structure is connected to a membrane.

24. Process as defined in claim 23, **characterized in that** a function layer is sprayed onto the carrier structure and/or onto the membrane prior to their connection.

25. Process as defined in claim 24, **characterized in that** prior to the connection between carrier structure and membrane a function layer is sprayed onto a connecting side of the membrane and an oppositely located side.

26. Process as defined in claim 25, **characterized in that** the respective spraying on is carried out simultaneously.

27. Process as defined in any one of claims 24 to 26, **characterized in that** the function layer is a reaction layer.

28. Process as defined in any one of claims 24 to 27, **characterized in that** the connection between carrier structure and membrane is brought about by roller application.

29. Process as defined in any one of claims 23 to 28, **characterized in that** an additional carrier structure is connected to the carrier structure-membrane connection.

30. Process as defined in claim 29, **characterized in that** the additional carrier structure is rolled on.

31. Process as defined in claim 29 or 30, **characterized in that** the additional carrier structure is built up essentially in the same way as the carrier structure first connected to the membrane.

32. Process as defined in any one of claims 29 to 31, **characterized in that** the additional carrier structure is produced essentially in the same way as the carrier structure first connected to the membrane.

33. Process as defined in any one of claims 23 to 32, **characterized in that** an electrode-membrane unit for a fuel cell is formed.

34. Process as defined in any one of claims 1 to 16, **characterized in that** the first layer is a rolled-on reaction layer.

35. Process as defined in claim 34, **characterized in that** a barrier layer is sprayed onto the rolled-on reaction layer.

36. Process as defined in claim 34 or 35, **characterized in that** a contact layer is sprayed onto an electrically non-conductive carrier.

37. Process as defined in claim 36, **characterized in that** essentially the same material as for the barrier layer is used for the contact layer.

38. Process as defined in any one of claims 35 to 37, **characterized in that** the barrier layer and the contact layer are sprayed on at the same time.

39. Process as defined in any one of claims 34 to 38, **characterized in that** a membrane is arranged on an outer function layer.

40. Use of an electrode assembly produced according to the process as defined in any one of claims 23 to 32 in a fuel cell.

41. Use of an electrode produced according to the processes as defined in any one of claims 1 to 22 or 34 to 39 as a gas diffusion electrode.

42. Use of an electrode produced according to the processes as defined in any one of claims 1 to 22 or 34 to 39 as an oxygen-consuming electrode.

43. Electrode having a rolled-on, catalytically active reaction layer (100), **characterized in that** a barrier layer (102) produced by means of a sprayed on powder is arranged on the reaction layer (100).

44. Electrode as defined in claim 43, **characterized in that** the barrier layer (102) is formed by a mixture of carbon and a hydrophobing material.

45. Electrode as defined in claim 44, **characterized in that** the hydrophobing material is PTFE.

46. Electrode as defined in any one of claims 43 to 45, **characterized in that** the barrier layer (102) has a surface density in the range of between 0.4 mg/cm² and 0.8 mg/cm².

## Revendications

1. Procédé de fabrication d'une électrode multicouche ou d'une unité sandwich d'électrodes dans lequel on applique par laminage une première couche sur un support et on fabrique au moins une autre couche fonctionnelle en déposant une poudre par aspersion.

2. Procédé selon la revendication 1, **caractérisé en ce que** la poudre est déposée par aspersion sèche.

3. Procédé selon la revendication 1 ou 2, **caractérisé en ce que** l'application par laminage est réalisée avec un ou plusieurs rouleaux chauffés.

4. Procédé selon l'une quelconque des revendications précédentes, **caractérisé en ce que** le support est configuré en réseau support.

5. Procédé selon l'une quelconque des revendications précédentes, **caractérisé en ce que** le support est fabriqué à partir d'un matériel métalliquement conducteur.

6. Procédé selon l'une quelconque des revendications précédentes, **caractérisé en ce que** le support est fabriqué en métal spécial.

7. Procédé selon l'une quelconque des revendications 1 à 5, **caractérisé en ce que** le support est fabriqué en nickel argenté.

8. Procédé selon l'une quelconque des revendications 1 à 5, **caractérisé en ce que** le support est fabriqué en titane.

9. Procédé selon l'une quelconque des revendications 1 à 4, **caractérisé en ce que** le support comporte une matière électriquement non conductrice sur laquelle une couche de contact conductrice est ou a été déposée.

10. Procédé selon l'une quelconque des revendications précédentes, **caractérisé en ce qu'**une couche fonctionnelle déposée par aspersion est une couche réactionnelle.

11. Procédé selon la revendication 10, **caractérisé en ce qu'**une couche réactionnelle est fabriquée en déposant par aspersion un matériau catalyseur supporté par du charbon.

12. Procédé selon la revendication 11, **caractérisé en ce qu'**on utilise du platine en tant que matériau catalyseur.

13. Procédé selon l'une quelconque des revendications précédentes, **caractérisé en ce qu'**une couche fonctionnelle déposée par aspersion est une couche de barrage.

14. Procédé selon la revendication 13, **caractérisé en ce que** pour former une couche de barrage on utilise un mélange de carbone et d'un matériau hydrophobant.

15. Procédé selon la revendication 14, **caractérisé en ce qu'**on utilise du PTFE en tant que matériaul hydrophobant.

16. Procédé selon l'une quelconque des revendications 13 à 15, **caractérisé en ce que** la couche de barrage présente une densité superficielle comprise entre 0,3 mg/cm² et 1 mg/cm².

17. Procédé selon l'une quelconque des revendications précédentes, **caractérisé en ce qu'**on fabrique une structure support en appliquant par laminage une poudre de charbon sur un support.

18. Procédé selon la revendication 17, **caractérisé en ce qu'**on applique par laminage la poudre de charbon mélangée à un liant.

19. Procédé selon la revendication 18, **caractérisé en ce qu'**on utilise un matériel hydrophobant en tant que liant.

20. Procédé selon la revendication 18 ou 29, **caractérisé en ce qu'**on utilise du PTFE en tant que liant.

21. Procédé selon l'une quelconque des revendications 17 à 20, **caractérisé en ce qu'**on mélange un agent porogène à la matière à appliquer par laminage.

22. Procédé selon l'une quelconque des revendications 17 à 21, **caractérisé en ce qu'**on ajuste la composition de la matière à laminer et/ou la taille des particules dans cette matière et/ou une pression exercée lors de l'application par laminage.

23. Procédé selon l'une quelconque des revendications 17 à 22, **caractérisé en ce que** la structure support est reliée à une membrane.

24. Procédé selon la revendication 23, **caractérisé en ce qu'**on dispose par aspersion une couche fonctionnelle sur la structure support et/ou sur la membrane, avant leur liaison.

25. Procédé selon la revendication 24, **caractérisé en ce que**, avant de relier la structure support et la membrane, on dépose par aspersion une couche fonctionnelle sur un côté de liaison de la membrane et un côté opposé.

26. Procédé selon la revendication 25, **caractérisé en ce que** le dépôt par aspersion concerné a lieu en même temps.

27. Procédé selon l'une quelconque des revendications 24 à 26, **caractérisé en ce que** la couche fonctionnelle est une couche réactionnelle.

28. Procédé selon l'une quelconque des revendications 24 à 27, **caractérisé en ce que** la liaison entre la structure support et la membrane est réalisée par application par laminage.

29. Procédé selon l'une quelconque des revendications 23 à 28, **caractérisé en ce qu'**on relie à la liaison structure support/membrane une autre structure support.

30. Procédé selon la revendication 29, **caractérisé en ce que** l'autre structure support est laminée.

31. Procédé selon la revendication 29 ou 30, **caractérisé en ce que** l'autre structure support a essentiellement la même structure que la structure support qui est reliée la première à la membrane.

32. Procédé selon l'une quelconque des revendications 29 à 21, **caractérisé en ce que** l'autre structure support est fabriquée essentiellement de la même façon que la structure support qui est reliée la première à la membrane.

33. Procédé selon l'une quelconque des revendications 23 à 32, **caractérisé en ce qu'**on forme une unité électrode-membrane pour une pile à combustible.

34. Procédé selon l'une quelconque des revendications 1 à 16, **caractérisé en ce que** la première couche est une couche réactionnelle appliquée par laminage.

35. Procédé selon la revendication 34, **caractérisé en ce qu'**on dépose par aspersion une couche de barrage sur la couche réactionnelle appliquée par laminage.

36. Procédé selon la revendication 34 ou 35, **caractérisé en ce qu'**on dépose par aspersion une couche de contact sur un support électriquement non conducteur.

37. Procédé selon la revendication 36, **caractérisé en ce qu'**on utilise, pour la couche de contact, essentiellement le même matériau que pour la couche de barrage.

38. Procédé selon l'une quelconque des revendications 35 à 37, **caractérisé en ce que** la couche de barrage et la couche de contact sont déposées en même temps par aspersion.

39. Procédé selon l'une quelconque des revendications 34 à 38, **caractérisé en ce qu'**on dispose une membrane sur une couche fonctionnelle extérieure.

40. Utilisation d'une unité sandwich d'électrodes fabriquée selon l'une quelconque des revendications 23 à 32 dans une pile à combustible.

41. Utilisation d'une électrode fabriquée selon les procédés selon l'une quelconque des revendications 1 à 22 ou 34 à 39 en tant qu'électrode de diffusion de gaz.

42. Utilisation d'une électrode fabriquée selon les procédés selon l'une quelconque des revendications 1 à 22 ou 34 à 39 en tant qu'électrode consommatrice d'oxygène.

43. Electrode qui présente une couche réactionnelle à action catalytique appliquée par laminage (100), **caractérisée en ce qu'**une couche de barrage (102) fabriquée au moyen d'une poudre déposée par aspersion est disposée sur la couche réactionnelle (100).

44. Electrode selon revendication 43, **caractérisée en ce que** la couche de barrage (102) est formée d'un mélange de carbone et d'un matériau hydrophobant.

45. Electrode selon la revendication 44, **caractérisée en ce que** le matériau hydrophobant est du PTFE.

46. Electrode selon l'une quelconque des revendications 43 à 45, **caractérisée en ce que** la couche de barrage (102) présente une densité superficielle comprise entre 0,4 mg/cm² et 0,8 mg/cm².
